# EUROPÄISCHE PATENTSCHRIFT

(11) **EP 3 100 143 B1**
(45) Veröffentlichungstag und Bekanntmachung des Hinweises auf die Patenterteilung: **06.11.2019**
(21) Anmeldenummer: 15701476.2
(22) Anmeldetag: 28.01.2015
(51) Int. Cl.: G06F 3/039, G06F 3/0488, G06F 3/044, G06F 3/045

(54) **BEDIENUNGSHILFE FÜR EIN BERÜHRUNGSEMPFINDLICHES DISPLAY**
OPERATING AID FOR A TOUCH-SENSITIVE DISPLAY
AIDE À LA COMMANDE POUR DISPOSITIF D'AFFICHAGE TACTILE

(30) Priorität: 30.01.2014 DE 202014000752 U
(43) Veröffentlichungstag der Anmeldung: 07.12.2016
(73) Patentinhaber: Depold, Lucian, 71065 Sindelfingen (DE)
(72) Erfinder: Depold, Lucian, 71065 Sindelfingen (DE)
(74) Vertreter: Wacker, Jost Oliver
(86) Internationale Anmeldenummer: PCT/EP2015/000159
(87) Internationale Veröffentlichungsnummer: WO 2015/113759

(56) Entgegenhaltungen:
- WO-A2-2010/082196
- DE-U1-202012 011 380
- US-A1- 2007 135 011
- US-A1- 2011 157 056
- US-A1- 2011 184 824
- US-A1- 2011 241 999
- US-A1- 2012 256 862
- US-A1- 2013 215 029

## Beschreibung

Die Erfindung betrifft eine Bedienungshilfe für die Verwendung an einem berührungsempfindlichen kapazitiven Display eines elektronischen Gerätes, wie insbesondere einem Smartphone oder einem Tabletcomputer. Die Bedienungshilfe weist ein Grundelement auf, an dem eine an einer displayseitigen Oberfläche vorgesehene Haftschicht für die lösbare Festlegung am Display vorgesehen ist. Zudem ist an dem Grundelement wenigstens ein Aktivierungsbereich vorgesehen, der an einer von der displayseitigen Oberfläche abgewandten benutzerseitigen Außenseite taktil detektierbar ist. Über diesen Aktivierungsbereich kann eine Signalzone beaufschlagt werden, die beim Anbringen der Bedienungshilfe an dem jeweiligen Display an deren displayseitiger Oberfläche positioniert wird und innerhalb der das kapazitive Steuerungssignal generiert werden kann. Die Signalzone wird dabei durch das eingeschaltete Display durch ein elektrisches Feld gebildet, das sich von der displayseitigen Oberfläche auch ein Stück weit in die Bedienungshilfe hinein erstreckt. Insbesondere durch die Verwendung eines leitfähigen Materials der Bedienungshilfe kann hierbei die Erstreckung der Signalzone vergrößert werden. Über den Aktivierungsbereich und die Signalzone kann dabei durch Berührung an der benutzerseitigen Außenseite ein Steuerungssignal erzeugt werden, das seitens des Displays beziehungsweise des elektrischen Gerätes detektiert und in einen Steuerungsbefehl umgewandelt werden kann. Dabei ist am Aktivierungsbereich eine ertastbare Druckbetätigungszone vorgesehen, die in eine Passivstellung verbringbar beziehungsweise dauerhaft in dieser positioniert ist, wobei in dieser Passivstellung kein Steuerungssignal über die Signalzone generiert wird oder generiert werden kann. Dadurch kann die Druckbetätigungszone vom Benutzer ertastet werden beziehungsweise kann der Benutzer einen Finger an der Druckbetätigungszone belassen, die zumindest in einem unbelasteten Zustand beabstandet zur Signalzone angeordnet ist, so dass die Übertragung des Steuerungssignals in der Druckbetätigungszone unterbunden ist.

Derartige Bedienungshilfen werden häufig verwendet, um beispielsweise bei Spielen, die auf einem Tabletcomputer oder einem Smartphone mit einem berührungsempfindlichen Bildschirm gespielt werden, dem Spieler ertastbare Betätigungsbereiche zu geben, über die er die zugehörigen virtuellen Bedienelemente des Gerätes betätigen kann. Die ertastbaren Betätigungsbereiche ermöglichen dem Spieler dabei eine leichtere Bedienung und sorgen dadurch für ein verbessertes Spielerlebnis.

Auf dem Markt ist dabei beispielsweise das Invisible Gampad™ der Firma Obinova LLC bekannt. Diese Bedienungshilfe besteht im Wesentlichen aus einer dünnen durchsichtigen Klebefolie, in die beispielsweise kreuz- oder kreisförmige Ausnehmungen eingelassen sind. Die Folie wird über einem virtuellen Bedienelement eines Spiels auf das Display des betreffenden elektronischen Geräts aufgeklebt. Anschließend kann der Benutzer entlang der Ränder der Ausnehmungen eine geführte Bedienbewegung ausführen oder ein virtuelles Bedienelement über den Betätigungsbereich betätigen. Eine entsprechende Bedienungshilfe ist beispielsweise in US 2013 0095301 A1 gezeigt.

Nachteilig an der bekannten Bedienungshilfe ist, dass in dem Moment, in dem der Betätigungsbereich oder die jeweilige Materialausnehmung gerade ertastet wird, in der Regel auch bereits ein Steuerungssignal an die Displayoberfläche abgegeben wird. Zudem ist die verwendete durchsichtige Klebefolie so dünn, dass auch neben der Materialausnehmung durch die Klebefolie hindurch ein Steuerungssignal erzeugt werden kann. Ferner hat die bekannte Bedienungshilfe, die in erster Linie für den dauerhaften Verbleib an dem jeweiligen Gerät vorgesehen ist, den Nachteil, dass sie nur relativ umständlich wieder von der Displayoberfläche entfernt werden kann.

US2011/0157056A1 zeigt hierbei verschiedene Ausführungsformen von Knöpfen zur Anbringung an einem Touchscreen. Der Querschnitt der Knöpfe ist dabei derart konstruiert, dass sie auf Druck entweder kollabieren oder verkippen, wodurch wiederum ein Signal erzeugt werden kann.

US2011/0184824 A1 beschreibt ein berührungsempfindliches Display mit einer Bedienungshilfe nach dem Oberbegriff des Anspruchs 1.

DE202012011380U1 zeigt eine Folie zur Auflage auf einen Touchscreen, an der mehrere ertastbare Aussparungen vorgesehen sind.

US2012/0256862A1 beschreibt Bedienhilfen für Touchscreens, die durch ertastbare Umrandungen für virtuelle Bedienfelder gebildet sind. Die Umrandungen können dabei beispielsweise mittels "microsuction" an den Bedienfeldern festgelegt werden.

US2013/0215029A1 zeigt eine Bedienhilfe, die mittels eines statisch aufgeladenen Films an einem Touchscreen festgelegt werden kann. Diese weist einen zentralen nicht leitenden Ruheknopf auf, benachbart zu dem mehrere leitende Bereiche zur Erzeugung von Steuerungssignalen vorgesehen sind.

WO2010/082196A2 beschreibt verschiedene Formen von durch Druck kollabierbaren Tasten, die an einem Touchscreen angebracht werden können.

US2007/0135011A1 zeigt ein bekanntes Wischtuch mit unterdruckerzeugenden Poren.

Darüber hinaus sind Bedienungshilfen bekannt, mittels denen eine übliche Schreibtastatur nachträglich an einem Touchscreen zumindest nachempfunden werden kann.

US 2011/0241999 beschreibt hierzu eine Tastatur, die beispielsweise mittels seitlichen Klebebereichen nachträglich an einem Touchscreen angebracht werden kann. Die einzelnen Tasten sind dabei durch ein dünnes Kunststoffprofil gebildet, das von außen einer üblichen Schreibtastaturtaste nachempfunden und innen hohl ist. Durch Druck auf die jeweilige Oberseite dieser Tasten kann diese soweit nach innen verlagert werden, dass der Finger ausreichend nahe an den betreffenden Touchscreen kommt, um ein Signal auszulösen.

US 8,206,047 B1 und US 8,790,025 B2 beschreiben jeweils eine Tastatur, bei der die einzelnen Tasten ebenfalls durch ein dünnes Kunststoffprofil gebildet sind, das von außen einer üblichen Schreibtastatur nachempfunden ist. Auf der Innenseite weisen die Tasten dabei jeweils eine Stützstruktur auf, die ebenfalls durch ein dünnes Kunststoffprofil gebildet ist und die bei Druck auf die Oberseite der Tasten spürbar kollabiert, um den Druckpunkt einer üblichen Tastatur möglichst originalgetreu nachbilden zu können.

Digitale Spiele erfordern in der Regel einen schnellen Wechsel zwischen den verfügbaren virtuellen Aktionen der Spielfigur. Bei der Steuerung dieser Spiele mit Gamepads gängiger Spielkonsolen (z.B. "XBOX 360" oder "Playstation 4") ergibt sich dadurch ein schneller Wechsel der Daumen zwischen den vorhandenen Knöpfen. Die Daumen üben dabei Druck auf die Oberfläche der Gamepads aus, um den angestrebten Knopf zu finden und gegebenenfalls bei stärkerem Druck auch sofort betätigen zu können. Die Druckausübung in Kombination mit der Bewegung des Daumens erzeugt dabei einen relativ hohen Reibungswiderstand.

Die Tasten der erwähnten Tastaturen sind dazu ausgelegt von oben herab gedrückt zu werden. Ein Wechsel zwischen Tasten unter Druckausübung, wie es von klassischen Gamepads abverlangt wird, würde jedoch das Kunststoffprofil der aktuell gedrückten Taste in die Richtung der anderen Taste mit sich ziehen und somit das Alternieren zwischen zwei Tasten nur schwer möglich machen. Solche Tastaturen sind außerdem nur mit bestimmten Gerätemodellen kompatibel, da sie eine bestimmte Gerätebreite voraussetzen, um mittels seitlich anliegender Klebebereiche angebracht werden können.

Derartige Tastaturen sind somit aufgrund ihrer Formgebung für die meisten Spieleanwendungen ungeeignet. Zudem sind die Herstellungskosten derartiger Tastaturen relativ hoch.

Die Aufgabe der Erfindung ist es, bei einer gattungsgemäßen Bedienungshilfe die genannten Nachteile zu vermeiden und insbesondere bei Spielanwendungen ein differenzierteres Auslösen der Steuerungssignale sowie ein komfortableres Anbringen und Ablösen zu ermöglichen.

Diese Aufgabe wird durch ein berührungsempfindliches Display mit einer Bedienungshilfe mit den Merkmalen des Anspruchs 1 gelöst. Dabei weist der Aktivierungsbereich der Bedienungshilfe an der Druckbetätigungszone zwischen der displayseitigen Oberfläche und der benutzerseitigen Außenseite einen elastischen Materialaufbau auf, der wenigstens durch die Haftschicht und eine elastische Trägerschicht des Grundelementes gebildet ist. Dadurch kann die Druckbetätigungszone durch Druckbeaufschlagung von der Passivstellung, in der die Druckbetätigungszone beabstandet zur Signalzone angeordnet ist, in eine Aktivstellung verbracht werden, in der die Druckbetätigungszone mit dem daran anliegenden Finger beispielsweise teilweise innerhalb der Signalzone angeordnet ist und dadurch ein Steuerungssignal generiert werden kann. In der Passivstellung weist der Materialaufbau des Aktivierungsbereichs hierbei eine die räumliche Erstreckung der Signalzone übertreffende erste Materialdicke auf, die sicherstellt, dass kein Steuerungssignal übertragen werden kann. Durch Druckbeaufschlagung der Druckbetätigungszone ist der elastische Materialaufbau dann in die Aktivstellung verbringbar, in der er eine zweite Materialdicke aufweist, durch die die Übertragung des Steuerungssignals freigegeben ist. Der Benutzer kann dadurch auch bei Spieleanwendungen seinen Finger vorab in der Druckbetätigungszone des Aktivierungsbereichs bereithalten, ohne dass ein Steuerungssignal generiert wird. Und erst dann, wenn er zusätzlich ein Steuerungssignal erzeugen möchte, verändert er seine Position beispielsweise in horizontaler oder vertikaler Richtung zur Signalzone hin. In dieser wird dann eine von dem elektronischen Gerät detektierbare, insbesondere kapazitive Änderung erzeugt, die in das gewünschte Steuerungssignal umgewandelt wird. Auf diese Weise kann an der Druckbetätigungszone eine Art Druckpunkt vorgehalten werden, über den insbesondere bei Spielanwendungen eine komfortablere und exaktere Steuerung des elektronischen Gerätes möglich ist. Hierbei wird in der Passivstellung die Übertragung des Steuerungssignals durch den Materialaufbau des Aktivierungsbereichs blockiert, während in der Aktivstellung die Übertragung des Steuerungssignals freigegeben ist. Durch diese vertikale Verstellbarkeit des Materialaufbaus ist es möglich, die Druckbetätigungszone in der Passivstellung zu ertasten, ohne dass hierdurch ein Steuerungssignal generiert wird. Und erst dann, wenn der Benutzer an dieser Stelle auch noch ein Steuerungssignal erzeugen möchte, beaufschlagt er die Druckbetätigungszone mit einem ausreichenden Druck, um die Druckbetätigungszone in die Aktivstellung zu verlagern. Hierbei gelangt der betreffende Bedienungsfinger des Benutzers durch die elastische Verformung des Materialaufbaus in die Signalzone, in der er ein Steuerungssignal am Display generiert. Die Haftschicht fixiert dabei jede einzelne Druckbetätigungszone in ihrer aktuellen Position auf dem Touchscreen und sperrt größtenteils die Elastizität des weichen Materials in der Ebene parallel zum Touchscreen. Die Elastizität ist so fast nur noch orthogonal zur Touchscreen-Ebene als Druckpunkt vorhanden. Dabei ist es günstig, wenn die Trägerschicht durch einen geschäumten Kunststoff, wie beispielsweise Moosgummi gebildet ist. Hierdurch kann die Bedienungshilfe kostengünstig und mit einem geeigneten Druckpunkt für Spielanwendungen hergestellt werden. Eine andere Möglichkeit für die Erzeugung einer weichen Trägerschicht, wäre die Verwendung eines Gels, das von einer glatten Membran umschlossen wird, ähnlich den Geleinlagen von Fahrradsitzen oder Schuheinlagen. Zudem ist es günstig, wenn die Druckbetätigungszone durch eine Materialausnehmung des Aktivierungsbereichs, wie beispielsweise eine Ausstanzung, gebildet ist. Hierdurch ist eine besonders einfache und kostengünstige Herstellung der Bedienungshilfe mit unterschiedlichen Formen und unterschiedlicher Anzahl der ertastbaren Druckbetätigungszone möglich. Die Materialausnehmung kann dabei beispielsweise kreis- oder ellipsenförmig, tropfenförmig, mehreckig oder spaltförmig ausgebildet sein. Zudem kann sie sowohl durch eine vollständige Öffnung der Materialausnehmung als auch lediglich durch einen fühlbaren Randabschnitt derselben gebildet werden. Da jede Druckbetätigungszone selbsthaftend ist, kann die Bedienungshilfe auch aus mehreren, frei kombinierbaren Teilen bestehen und erfordert keine bestimmte Gerätebreite, um angebracht werden zu können. Dadurch ist die Bedienungshilfe mit einer Vielzahl von Geräten kompatibel, wodurch die Herstellungs- und Entwicklungskosten gesenkt werden.

Vorteilhafterweise ist in der Aktivstellung dabei die Druckbetätigungszone wenigstens teilweise und die zweite Materialdicke vollständig innerhalb der räumlichen Erstreckung der Signalzone angeordnet, wodurch die Übertragung des Steuerungssignals freigegeben wird. Hierdurch kann beispielsweise eine detektierbare kapazitive Änderung in Folge der Anordnung eines Fingers benachbart zur Displayoberfläche erzeugt werden. Bei dieser Vorgehensweise kann eine Differenz der Materialdicke des Aufbaus vorbestimmt werden, die durch elastische Verformung erreicht werden muss, bevor an dem betreffenden Aktivierungsbereich ein Steuerungssignal generiert wird. Auf diese Weise kann sichergestellt werden, dass beim bloßen Ertasten des Aktivierungsbereichs beziehungsweise beim bloßen Anliegen des Fingers des Benutzers nicht bereits ein ungewolltes Steuerungssignal generiert wird, sondern hierfür erst ein gewisser Druckpunkt erreicht werden muss. Zudem lassen sich auf diese Weise auch virtuelle Bedienelemente des Displays, die für die jeweilige Anwendung nicht betätigt werden sollen, mittels des Materialaufbaus abdecken, um nicht versehentlich betätigt werden zu können. Der weiche Materialaufbau der Druckbetätigungszone bildet außerdem im eingedrückten Zustand eine Art Materialrampe, die es dem Finger erlaubt die Druckbetätigungszone auch unter Druckausübung leicht wieder verlassen zu können.

Dabei ist es günstig, wenn der Materialaufbau wenigstens durch die Haftschicht und eine elastische Trägerschicht des Grundelementes gebildet ist und die erste Materialdicke in der Passivstellung wenigstens 0,8 mm beträgt. Hierdurch kann beispielsweise bei der Verwendung einer Polymer- und/oder einer oder mehrerer Mikrofaserschichten für den Materialaufbau des Aktivierungsbereichs die Übertragung eines Steuerungssignals in der Passivstellung der Druckbetätigungszone zuverlässig vermieden werden.

Vorteilhafterweise ist die Haftschicht durch eine Polymerschicht gebildet, die an der displayseitigen Oberfläche eine Vielzahl von offenen Poren aufweist, mittels denen jeweils ein Unterdruck an der Displayoberfläche erzeugbar ist. Durch eine derartige Polymerschicht kann das Grundelement besonders stabil an der betreffenden Displayoberfläche befestigt werden und nach Gebrauch auch wieder problemlos und rückstandsfrei von dieser gelöst werden. Durch die Vielzahl der offenen Poren der Polymerschicht, über die die Haftwirkung hierbei erzeugt wird, ist eine hohe Zahl an Wiederverwendungen der Bedienungshilfe möglich, bevor die Haftwirkung merklich nachlässt. Ferner haften derartige Polymerschichten auch an relativ stark verstaubten oder fettigen Oberflächen. Außerdem können solche Haftschichten sehr weich bzw. sehr dünn hergestellt werden, so dass sie den durch den elastischen Materialaufbau erzeugten Druckpunkt unterstützen bzw. nicht behindern. Eine entsprechende Polymerschicht ist beispielsweise in US 7431983 B2 näher beschrieben. Vorteilhafterweise ist das Grundelement zudem wenigstens teilweise aus antistatischem Material gebildet, wodurch das Entstehen von ungewollten elektrostatischen Ladungen an der Bedienhilfe beziehungsweise am berührungsempfindlichen Display verhindert wird. Auf diese Weise können elektrische Ladungen, die die Funktion der Bedienungshilfe kurzzeitig blockieren könnten, vermieden werden. Derartige Ladungen können dabei beim Spielen entstehen, wenn man mit dem steuerenden Finger häufig zwischen mehreren Bereichen hin und her wechselt. Beim Wechseln wird dabei der Finger meistens an der Bedienungshilfe gehalten, wobei eine Reibung erzeugt wird. In einer besonders vorteilhaften Ausführungsform ist das Grundelement zudem wenigstens bereichsweise transparent ausgebildet, wobei beispielsweise die Trägerschicht durch ein transparentes Material und die Haftschicht zudem derart dünn ausgebildet ist, dass das Grundelement insgesamt transparent ist. Hierdurch können Teile des Displays durch die Bedienungshilfe hindurch sichtbar erhalten werden, was z.B. das genaue Anbringen der Bedienungshilfe erleichtert.

Ferner ist es von Vorteil, wenn in den elastischen Materialaufbau mehrere Einstellausnehmungen zur Einstellung eines gewünschten Druckpunktes an der jeweiligen Druckbetätigungszone eingelassen sind, wie insbesondere durchgehende Öffnungen. Hierbei weisen die Materialausnehmungen beispielsweise am Nutenboden, am Knopfboden oder an den Mulden eine Vielzahl von kleinen, durchgehenden Ausnehmungen beziehungsweise Perforierungen auf, die beispielsweise in Form von Kreisen, Vierecken oder Hexagonen sein können. Diese Ausnehmungen können zwischen 0,2mm und 4mm breit sein. Durch die Anzahl und Größe dieser Ausnehmungen lässt sich einerseits die benötigte Druckkraft für die Signalerzeugung einstellen, wobei durch die Reduzierung des Materials weniger

Druck erforderlich ist. Andererseits wird der Bildschirm, auf dem die Bedienungshilfe angebracht wird, durch die Perforierungen hindurch sichtbar gemacht.

Vorteilhafterweise ist die Materialausnehmung dabei als durchgehende Ausnehmung des Grundelementes ausgebildet, wie beispielsweise in Form einer Ausstanzung. Auf diese Weise ist eine relativ freie Formgebung hinsichtlich des Aktivierungsbereichs möglich.

Ferner ist es günstig, wenn die Materialausnehmung muldenförmig ausgebildet ist und die displayseitige Oberfläche eine geschlossene Fläche bildet, wodurch die betreffende Displayoberfläche besonders gut gegenüber mechanischen Beanspruchungen während des Betriebs geschützt werden kann.

Zudem weist die Materialausnehmung eine maximale Erstreckung, wie beispielsweise einen Durchmesser einer kreis- oder ellipsenförmigen Ausnehmung, von 3 bis 10 mm auf. Hierdurch kann die Druckbetätigungszone leicht ertastet werden, ohne dass der betreffende Finger in direkte Anlage an dem Display kommen kann. Vielmehr wird die Berührung des Display erst durch eine druckbedingte Verformung der Druckbetätigungszone oder der Fingerspitze erreicht. Die maximale Erstreckung ist dabei in Abhängigkeit der Form der Ausnehmung, der Dicke des Grundelementes und gegebenenfalls auch in Abhängigkeit der Fingergröße des Benutzers so ausgewählt, dass ein direkter Kontakt des Fingers über die Ausnehmung am Display ohne Anlage am Material der Bedienungshilfe nicht möglich ist.

Vorteilhafterweise bildet die Materialausnehmung eine erste umlaufende Nut. Durch diese Nut ist z.B. ein leichter, flüssiger Übergang des Fingers von einer Himmelsrichtung in eine andere Himmelsrichtung möglich, was auch eine flüssigere Bewegung der Spielfigur zur Folge hat. Insbesondere ist dabei beim Wechseln der Himmelsrichtung eine stoppfreie Steuerungsbewegung möglich. Dabei ist es günstig, wenn eine zur ersten umlaufenden Nut konzentrisch angeordnete zweite umlaufende Nut vorgesehen ist, wobei zwischen beiden Nuten ein taktil erfassbares Trennelement vorgesehen ist. In manchen Spieleanwendungen kann so die Geschwindigkeit von Spielfiguren besser gesteuert werden, wenn beispielsweise über die eine Nut eine langsamere Bewegung generiert wird als über die andere Nut.

In einem weiteren Beispielist ist die Druckbetätigungszone durch eine über eine benutzerseitige Oberfläche des Grundelementes hinaus ragende Betätigungskontur gebildet, wodurch ein taktiles Detektieren der Druckbetätigungszone besonders einfach möglich ist. Zudem kann durch die vom Grundelement abragende Betätigungskontur das Steuerungssignal in komfortablerer Weise erzeugt werden.

Dabei ist es günstig, wenn die Betätigungskontur durch einen Knopf gebildet ist, der mit einem Stößelabschnitt in die Materialausnehmung des Grundelementes hinein ragt, wodurch, beispielsweise durch Berührung der Displayoberfläche, das Steuerungssignal in besonders komfortabler Weise erzeugt werden kann. Vorteilhafterweise ist der Knopf hierbei wenigstens bereichsweise elektrisch leitfähig, wodurch auch eine an der Displayoberfläche detektierbare kapazitive Änderung mittels des Knopfes erzeugt werden kann.

Zudem ist es günstig, wenn die Materialausnehmung durchgehend ausgebildet und der Stößelabschnitt vollständig durch das Grundelement hindurch verlagerbar ist, wodurch die Bedienungshilfe sowohl für kapazitive als auch für resistive Touchscreens verwendbar ist. In einer vorteilhaften Ausführungsform ist der Stößelabschnitt an einen Boden der als Mulde ausgebildeten Materialausnehmung anlegbar, wodurch die Displayoberfläche besonders gut gegen mechanische Beaufschlagungen geschützt werden kann.

In einer weiteren vorteilhaften Ausführungsform ist die Betätigungskontur durch einen ringförmigen Kragen aus elastischem Material gebildet, der benachbart zur Ausnehmung auf das Grundelement aufgesetzt ist. Hierdurch kann auf einfache Weise eine relativ große Differenz zwischen der Dicke des Materialaufbaus in der Passivstellung und in der Aktivstellung vorbestimmt werden, um einen bestimmten Druckpunkt zu erzeugen.

In einer vorteilhaften Ausführungsform ist die Materialausnehmung des Aktivierungsbereichs durch eine erste umlaufende Nut gebildet, wodurch ein flächiger, kontinuierlicher Betätigungsbereich erzeugt werden kann. Der Druckpunkt kann dabei entweder durch einen die Signalzone überragenden, weichen Nutenboden erzeugt werden und/oder (beides zusammen ist möglich!) einer klein gewählten Nutbreite (zwischen 2mm und 10mm), die ein Anlegen des Fingers auf den Nutenboden ohne Druckausübung auf die Nutränder unmöglich macht. Daneben ist es günstig, wenn die Nut Buchten/Aussparungen aufweist (z.B. in wenigstens vier der acht Himmelsrichtungen), wodurch ein taktiles Erkennen dieser Positionen erleichtert wird. Das taktile Erkennen der Buchten / Positionen während der Druckausübung kann zudem durch durchgehende Ausnehmungen im Nutenboden (z.B. in Form von Löchern oder abgerundeten Dreiecken) zusätzlich verstärkt werden.

In einer weiteren vorteilhaften Ausführungsform weist die erste umlaufende Nut wenigstens eine weitere umlaufende Nut, die zur ersten Nut konzentrisch angeordnet ist und die durch ein taktil erfassbares Trennelement abgegrenzt ist. Das Trennelement verhindert den ungewollten Übergang von einer zur anderen Nut. In manchen Spieleanwendungen kann so die Geschwindigkeit von Spielfiguren gesteuert werden, da die inneren Nuten langsame Bewegungen zur Folge hätten und die Äußeren schnelle.

Diese Bedienungshilfen sind besonders vorteilhaft für das Steuern von Spielfiguren im virtuellen Raum. Durch die umlaufende Nut ist z.B. ein leichter, flüssiger Übergang des Fingers von der West-Richtung in die Nord/West-Richtung möglich, was auch eine flüssige Bewegung der Spielfigur zur Folge hat. Beim ursprünglichen Steuerkreuz war zwar auch ein leichter Übergang möglich, jedoch hätte der Materialaufbau zwischen der West- und Nord/West-Richtung ein kurzes Stoppen der Spielfigur zur Folge gehabt.

In einer sehr vorteilhaften Ausführungsform ist wenigstens eine Kante eines Druckbetätigungsbereichs abgerundet. Das Verlassen eines Aktivierungsbereiches unter Druckausübung wird so vereinfacht, da die abgerundete Kante eine Art Rampe bildet, die weniger Widerstand erzeugt als eine Kante. Insbesondere bei den Nuten ermöglicht eine abgerundete Kante auch ein komfortables (schmerzfreies) Folgen der Nut unter Druckausübung.

In den Figuren sind beispielhafte Ausführungsformen der Erfindung und weitere Beispiele, die das Verständnis der Erfindung erleichtern, dargestellt.

Es zeigen:
- Figur 1: eine perspektivische Ansicht eines elektronischen Gerätes mit zwei an einem Display angebrachten erfindungsgemäßen Bedienungshilfen,
- Figur 2: das elektronische Gerät nach Fig. 1 mit abgelösten Bedienungshilfen,
- Figur 3: eine vergrößerte Ansicht einer der Bedienungshilfen nach Fig. 2,
- Figur 4a: eine geschnittene Seitenansicht der angebrachten Bedienungshilfe nach Fig. 3 in einer Passivstellung,
- Figur 4b: eine geschnittene Seitenansicht der Bedienungshilfe nach Fig. 4a in einer Aktivstellung,
- Figur 4c: eine geschnittene Seitenansicht eines alternativen Beispiels der Bedienungshilfe nach Fig. 4a in der Aktivstellung,
- Figur 5a: eine perspektivische Ansicht einer weiteren Ausführungsform der erfindungsgemäßen Bedienungshilfe mit einer muldenförmigen Materialausnehmung,
- Figur 5b: eine geschnittene Seitenansicht der Bedienungshilfe nach Fig. 5a in der Passivstellung,
- Figur 5c: eine geschnittene Seitenansicht der Bedienungshilfe nach Fig. 5a in der Aktivstellung,
- Figur 6a: eine perspektivische Ansicht einer Bedienungshilfe mit einer durch einen Knopf gebildeten Betätigungskontur,
- Figur 6b: eine geschnittene Seitenansicht der Bedienungshilfe nach Fig. 6a in der Passivstellung,
- Figur 6c: eine geschnittene Seitenansicht der Bedienungshilfe nach Fig. 6a in der Aktivstellung,
- Figur 7a: eine perspektivische Ansicht einer Bedienungshilfe mit einer durch einen Blister gebildeten Betätigungskontur,
- Figur 7b: eine geschnittene perspektivische Ansicht der Bedienungshilfe nach Fig. 7a,
- Figur 7c: eine geschnittene Seitenansicht der Bedienungshilfe nach Fig. 7a in der Passivstellung,
- Figur 7d: eine geschnittene Seitenansicht der Bedienungshilfe nach Fig. 7a in der Aktivstellung,
- Figur 8: eine perspektivische Ansicht einer weiteren Ausführungsform der erfindungsgemäßen Bedienungshilfe mit einer durch einen ringförmigen Kragen gebildeten Betätigungskontur,
- Figur 9: eine perspektivische Ansicht einer weiteren Ausführungsform der erfindungsgemäßen Bedienungshilfe mit einem durch eine umlaufende Nut gebildeten Aktivierungsbereich,
- Figur 10: eine perspektivische Ansicht einer weiteren Ausführungsform der erfindungsgemäßen Bedienungshilfe mit einer umlaufenden Nut, die mehrere Einbuchtungen aufweist,
- Figur 11: eine perspektivische Ansicht einer weiteren Ausführungsform der erfindungsgemäßen Bedienungshilfe mit zwei konzentrisch angeordneten Nuten
- Figur 12: eine perspektivische Ansicht einer weiteren Ausführungsform der erfindungsgemäßen Bedienungshilfe mit Nuten, deren Ränder eine erhöhte Kontur aufweisen und
- Figur 13: eine teilweise geschnittene Ansicht einer alternativen Ausführungsform einer Materialausnehmung der erfindungsgemäßen Bedienungshilfe, die einen abgerundeten Rand aufweist.

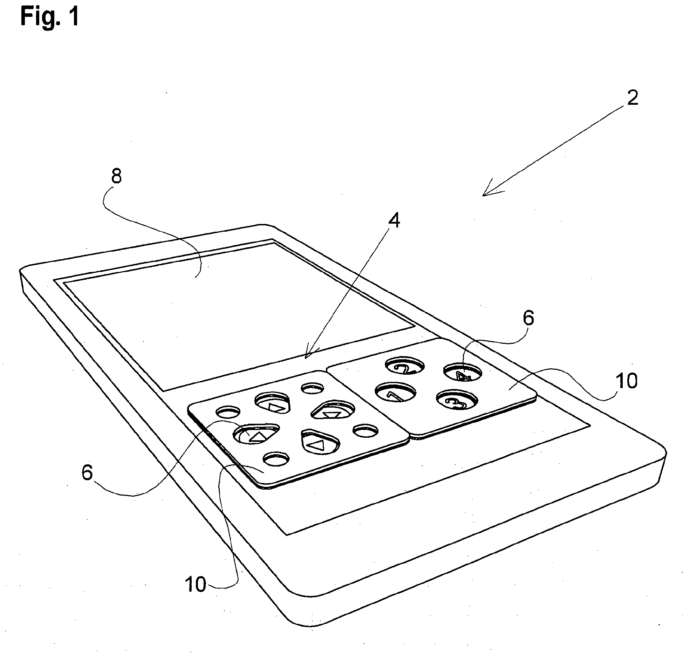

Fig. 1 zeigt ein elektronisches Gerät 2 in Form eines Smartphones mit einem berührungsempfindlichen Display 4, wie beispielsweise einem kapazitiven Touchscreen. Das berührungsempfindliche Display 4 zeigt mehrere virtuelle Bedienfelder 6 an, die beispielhaft als Pfeile oder Zahlen dargestellt sind. Die Bedienfelder 6 dienen zur Eingabe von Steuerungssignalen durch einen Benutzer, mittels denen beispielsweise virtuelle Spielfiguren (nicht dargestellt) innerhalb einer ebenfalls angezeigten Spielfläche 8 bewegt werden können.

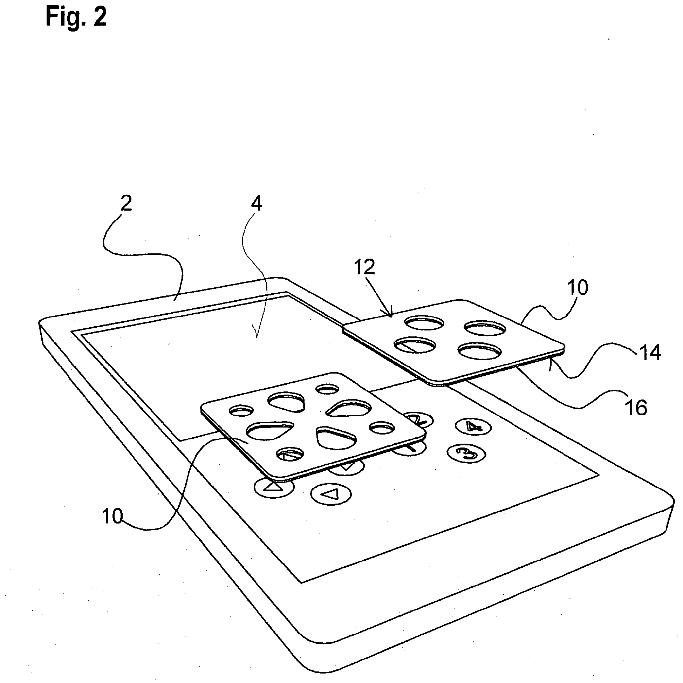

Um hierbei eine komfortablere und genauere Betätigung der Bedienfelder 6 zu ermöglichen, wurden an dem Display 4 zwei Bedienungshilfen 10 nachträglich angebracht, die nach Gebrauch wieder von dem Display gelöst werden können, wie aus Fig. 2 zu entnehmen ist.

Die Bedienungshilfen 10 weisen hierzu ein flächiges Grundelement 12 auf, dessen displayseitige Oberfläche 14 durch eine Haftschicht 16 in Form einer elastischen Polymerschicht gebildet ist. Die Polymerschicht ist hierbei beispielsweise von mikroskopisch kleinen Luftblasen durchsetzt, die an der displayseitigen Oberfläche 14 eine Vielzahl von offenen Poren bilden (nicht dargestellt). Beim Anpressen dieser Haftschicht 16 gegen das Display 4 wird durch elastische Rückstellkräfte in den Poren jeweils ein Unterdruck erzeugt, durch den das Grundelement 12 an dem Display 4 gehalten werden kann.

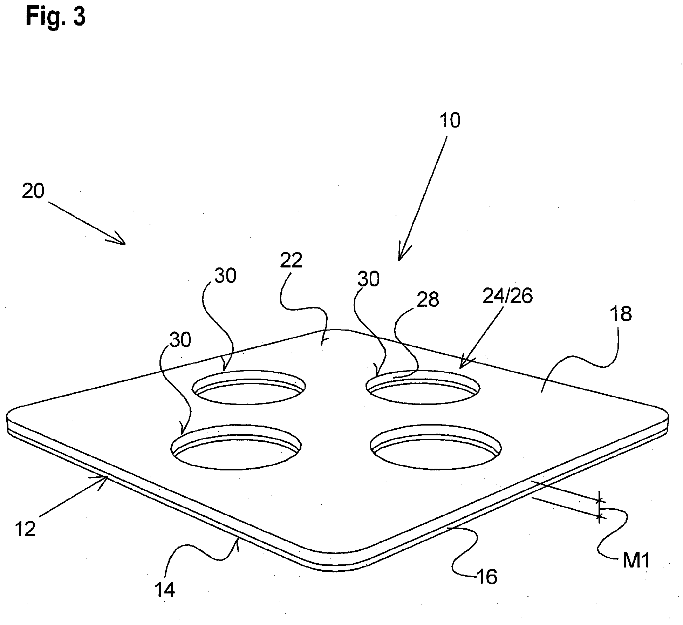

Wie insbesondere aus Fig. 3 zu entnehmen ist, ist die elastische Polymerschicht 16 an einer Trägerschicht 18 gehalten, die an einer von der displayseitigen Oberfläche 14 abgewandten benutzerseitigen Außenseite 20 der Bedienungshilfe 10 eine benutzerseitige Oberfläche 22 des Grundelementes 12 bildet und die beispielsweise aus einem elastischen Material, wie beispielsweise einer Polymerschicht, oder aus einer Mikrofaserschicht gebildet ist. Alternativ hierzu kann die Trägerschicht 18 auch durch einen geschäumten Kunststoff wie beispielsweise Moosgummi gebildet sein.

Zudem kann das Grundelement 12 insgesamt antistatisch ausgebildet sein oder wenigstens teilweise antistatisches Material enthalten. Darüber hinaus kann das Grundelement 12 wenigstens bereichsweise transparent ausgebildet sein, wobei beispielsweise die Trägerschicht 18 durch transparentes Material gebildet ist und die Haftschicht 12 derart dünn ausgebildet ist, dass auch diese wenigstens teiltransparent ist.

Um im angebrachten Zustand der Bedienungshilfen 10 die Bedienfelder 6 betätigen zu können, sind an dem Grundelement 12 mehrere Aktivierungsbereiche 24 vorgesehen. In der Ausführungsform gemäß Fig. 3 weisen die Aktivierungsbereiche 24 Materialausnehmungen 26 in Form von runden Ausstanzungen auf. Die Ränder dieser Materialausnehmungen 26 bilden wiederum Druckbetätigungszonen 30, die durch den Benutzer leicht ertastet werden können.

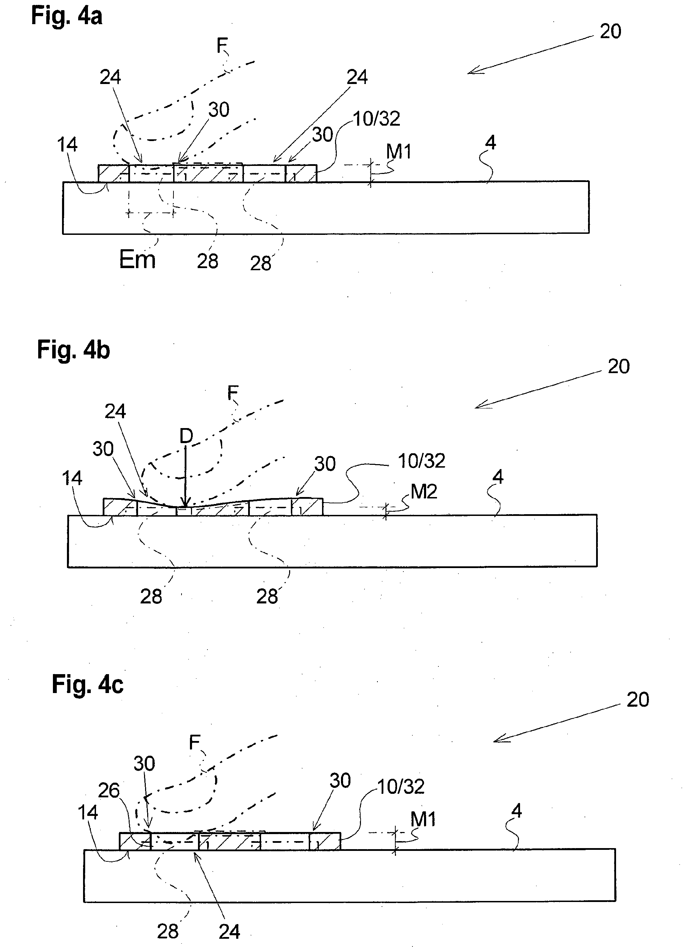

Wie insbesondere aus Fig. 4a zu entnehmen ist, erzeugt das berührungsempfindliche Display 4 im angebrachten Zustand der Bedienungshilfe 10 an der displayseitigen Oberfläche 14 jeweils eine Signalzone 28 der Aktivierungsbereiche 24. In diesen Signalzonen 28 wird ein Steuerungssignal generiert, sobald innerhalb dieser eine detektierbare kapazitive Änderung hervorgerufen wird, wie insbesondere durch den Eintritt eines Fingers F des Benutzers.

Die an der benutzerseitigen Außenseite 20 der Bedienungshilfe 10 vorgesehenen ertastbaren Druckbetätigungszonen 30, die durch den Rand der jeweiligen Materialausnehmung 26 gebildet ist, sind in Fig. 4a in einer Passivstellung dargestellt, in der sie jeweils beabstandet zur Signalzone 28 angeordnet sind. Die Materialausnehmungen 26 weisen hierbei bevorzugterweise einen maximalen Durchmesser beziehungsweise eine maximale Erstreckung Em auf, die zwischen 4 und 8 mm liegt. Hierdurch kann der Finger F des Benutzers, den Aktivierungsbereich 24 und insbesondere die Druckbetätigungszone 30 ertasten und an diese angelegt werden, ohne dass er dabei versehentlich über die Materialausnehmungen 26 an das Display angelegt werden kann und dadurch ein ungewolltes Steuerungssignal erzeugt wird.

Hierbei weist das Grundelement 12 zumindest in den Aktivierungsbereichen 24 zwischen der displayseitigen Oberfläche 14 und der benutzerseitigen Oberfläche 22 beziehungsweise der benutzerseitigen Außenseite 20 einen elastischen Materialaufbau 32 auf. Dieser Materialaufbau 32 bildet in der dargestellten Passivstellung der Druckbetätigungszone 30 eine erste Materialdicke M1, die die vertikale Erstreckung der Signalzone 28 übersteigt. Hierdurch wird die Erzeugung eines Steuerungssignals durch den anliegenden Finger F mittels des Materialaufbaus 32 wirksam unterbunden.

Wenn nun mittels des bereits am Aktivierungsbereich 24 anliegenden Fingers F ein Steuerungssignal generiert werden soll, wird an der Druckbetätigungszone 30 ein Druck D aufgebracht, wie in Fig. 4b dargestellt. Durch diesen Druck D des Fingers F wird der elastische Materialaufbau 32 zumindest an einem Randabschnitt der Druckbetätigungszone 30 zusammen gepresst, wobei sich diese in Richtung einer Aktivstellung verlagert. In dieser dargestellt Aktivstellung weist der Materialaufbau 32 eine deutlich geringere zweite Materialdicke M2 auf, die vollständig innerhalb der vertikalen Erstreckung der Signalzone 28 liegt. Hierdurch liegt auch die Druckbetätigungszone 30 mit dem daran anliegenden Finger F zumindest teilweise innerhalb der Signalzone 28. Folglich wird an der displayseitigen Oberfläche 14 wiederum eine kapazitive Änderung hervorgerufen, die seitens des Displays 4 detektierbar ist, so dass ein Steuerungssignal an das elektronische Gerät 2 abgegeben wird.

Die elastischen Eigenschaften des Materialaufbaus 32 können dabei sowohl allein durch die Haftschicht 16 oder die Trägerschicht 18 oder erfindungsgemäß über den gesamten Schichtaufbau hinweg erzeugt werden.

In einem alternativen Beispiel einer Bedienungshilfe 10, gemäß Fig. 4c, bei der der Materialaufbau 32 im Wesentlichen starr ist, erfolgt die Erzeugung des Steuerungssignals dagegen dadurch, dass der an der Druckbetätigungszone 30 anliegende Finger F durch Druckausübung an seiner Fingerspitze so verformt wird, dass diese soweit in die Materialausnehmung 26 hinein ragt, dass sie bis in die Signalzone 28 reicht und dadurch eine seitens des Displays 4 detektierbare kapazitive oder resistive Änderung bewirkt.

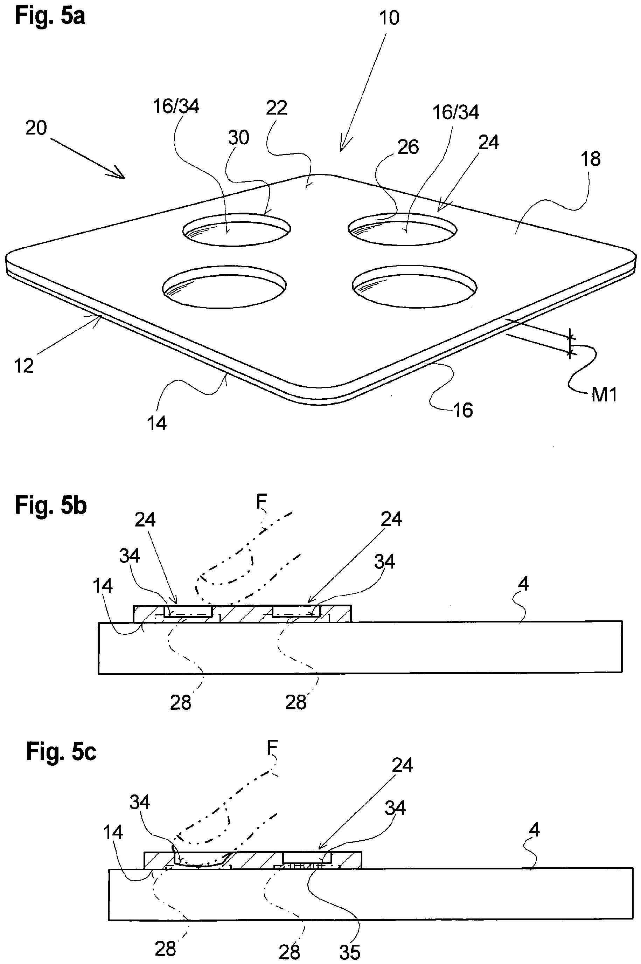

Fig. 5a zeigt eine weitere alternative Ausführungsform der Bedienungshilfe 10 bei dem die Haftschicht 16 eine geschlossene Fläche bildet und die Materialausnehmungen 26 dadurch unter Ausbildung eines beispielsweise durch die Haftschicht 16 gebildeten Bodens 34 muldenförmig ausgebildet sind.

Um auch an dieser Bedienungshilfe 10 ein Steuerungssignal durch kapazitive Änderung hervorrufen zu können, erstreckt sich die Signalzone 28 entweder von der displayseitigen Oberfläche 14 bis über den Boden 34 hinaus, wie in Fig. 5b dargestellt, oder der Boden 34 ist derart elastisch ausgeführt, dass der Finger F bei Druckbeaufschlagung des Bodens 34 bis in die Signalzone hineinreicht, wie in Fig. 5c dargestellt.

In diesem Fall können in den Boden 34 Einstellausnehmungen 35 eingelassen sein, die beispielsweise 0,2 bis 0,4 mm breit sind und durch die die zur Signalerzeugung benötigte Druckkraft eingestellt werden kann.

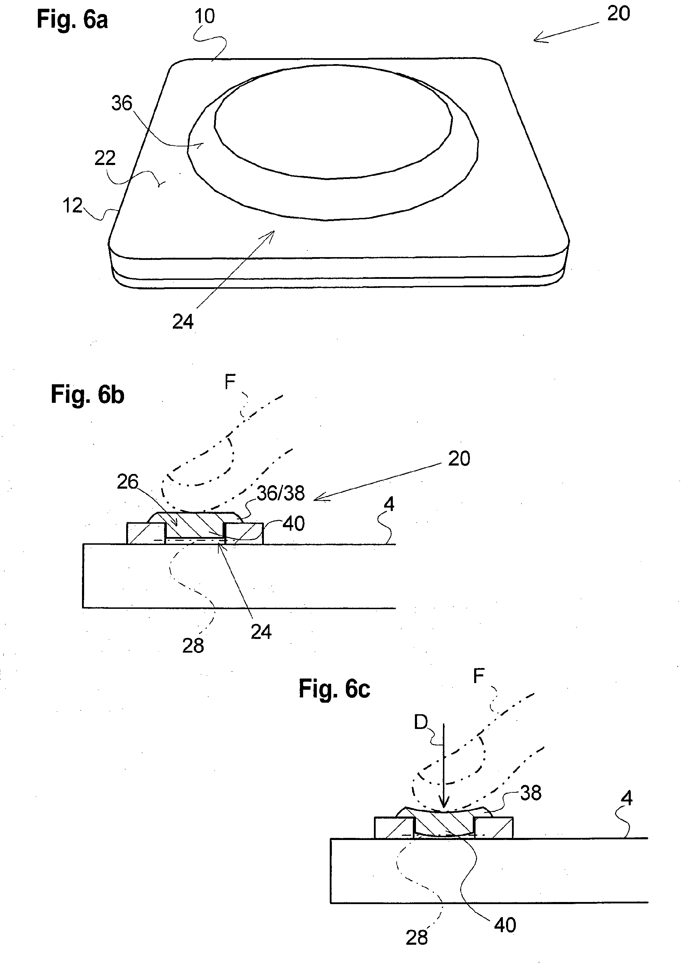

In den nachfolgenden Figuren 6 bis 8 sind weitere Bedienungshilfen 10 dargestellt, die im angebrachten Zustand an dem Display 4 entsprechend der oben beschriebenen Funktionsweise ebenfalls jeweils einen Aktivierungsbereich 24 mit einer Signalzone 28 und einer Druckbetätigungszone 30 aufweist, die durch Druckbeaufschlagung von einer Passivstellung in eine Aktivstellung verbringbar ist, in der mittels des anliegenden Fingers F ein Steuerungssignal generierbar ist.

In dem Beispiel gemäß Fig. 6a ist die Druckbetätigungszone 30 des Aktivierungsbereichs 24 der Bedienungshilfe 10 durch eine Betätigungskontur 36 gebildet, die an der benutzerseitigen Außenseite 20 der Bedienungshilfe 10 über die benutzerseitige Oberfläche 22 des Grundelementes 12 hinaus ragt.

Wie insbesondere aus Fig. 6b zu entnehmen ist, ist die Betätigungskontur 36 hierbei durch einen Knopf 38 gebildet, der mit einem Stößelabschnitt 40 in die Materialausnehmung 26 des Aktivierungsbereiches 24 hinein ragt. Der Stößelabschnitt 40 ist dabei so dimensioniert, dass er in der dargestellten Passivstellung beabstandet zum Display 4 beziehungsweise zur Signalzone 28 gehalten ist. Zudem ist der Knopf 38 aus einem elektrisch leitfähigen Material gebildet, wie beispielsweise aus einem elektrisch leitfähigen Kunststoff beziehungsweise aus einem Kunststoff in den elektrisch leitfähiges Material eingebettet ist. Hierdurch fungiert der gesamte Knopf 38 als Druckbetätigungszone 30, die in der Passivstellung vom Benutzer ertastet werden kann und an die ein Finger F angelegt werden kann, ohne dass ein Steuerungssignal am Display erzeugt wird.

Um ein Steuerungssignal am Display 4 zu erzeugen, wird der Knopf 38 mit einer Druckkraft D des Fingers F beaufschlagt, wodurch dieser von der Passivstellung in die Aktivstellung verbracht wird, in der der Stößelabschnitt 40 in die Signalzone 28 gelangt, wie in Fig. 6c dargestellt. Durch die Leitfähigkeit des Knopfes 38 wird hierbei eine vom Display detektierbare kapazitive oder resistive Änderung erzeugt, die in ein Steuerungssignal umgewandelt werden kann.

Alternativ zu dem hier dargestellten Beispiel des Aktivierungsbereiches 24 mit durchgehender Materialausnehmung 26 kann die displayseitige Oberfläche 14 auch geschlossen ausgebildet sein (nicht dargestellt).

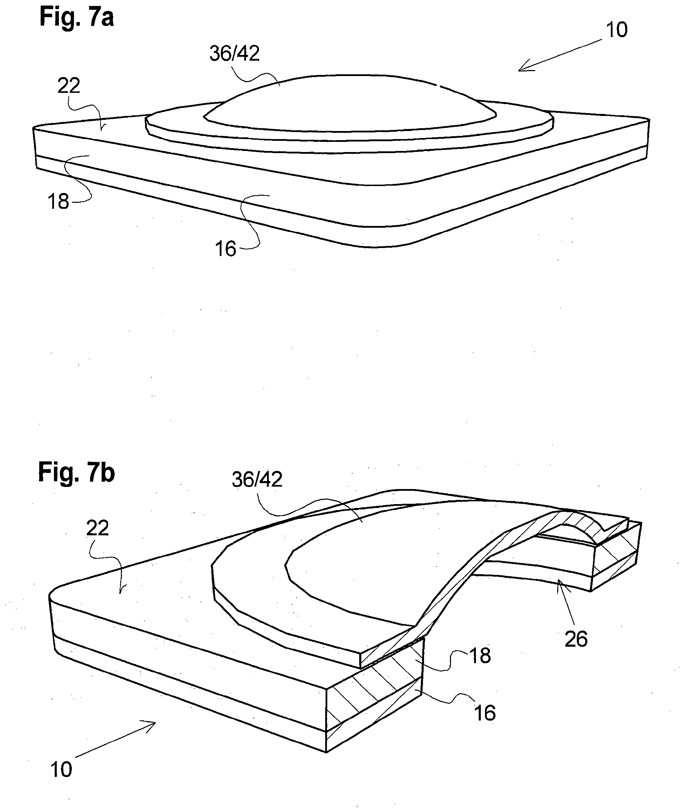

Fig. 7a und 7b zeigen eine weitere Bedienungshilfe 10, bei der die aus der benutzerseitigen Oberfläche 22 heraus ragende Betätigungskontur 36 durch einen Blister 42 gebildet ist, der beispielsweise am Rand der Materialausnehmung 26 an der Trägerschicht 18 angeklebt ist.

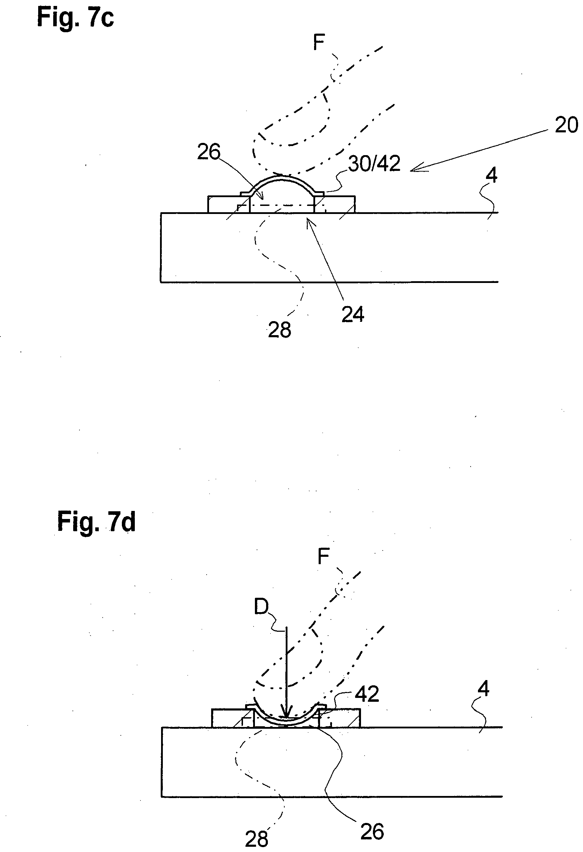

Hierbei fungiert der gesamte Blister 42 als Druckbetätigungszone 30, die in der Passivstellung vom Benutzer ertastet werden kann und an die der Finger F, wie in Fig. 7c dargestellt, angelegt werden kann, ohne dass ein Steuerungssignal am Display 4 erzeugt wird.

Um ein Steuerungssignal zu generieren, wird der Blister 42 mit einer Druckkraft D des Fingers F beaufschlagt, wodurch sich dieser in die Materialausnehmung 26 hinein umstülpt und dabei von der Passivstellung in die Aktivstellung verbracht wird, in der der Blister mit dem daran anliegenden Finger F in die Signalzone 28 gelangt, wie in Fig. 7d dargestellt. Hierdurch wird wiederum eine vom Display 4 detektierbare kapazitive oder resistive Änderung erzeugt, die in ein Steuerungssignal umgewandelt werden kann.

Auch hier kann alternativ zu der dargestellten Ausführungsform des Aktivierungsbereiches 24 mit durchgehender Materialausnehmung 26 an der displayseitigen Oberfläche 14 eine geschlossene Haftschicht 16 vorgesehen werden (nicht dargestellt).

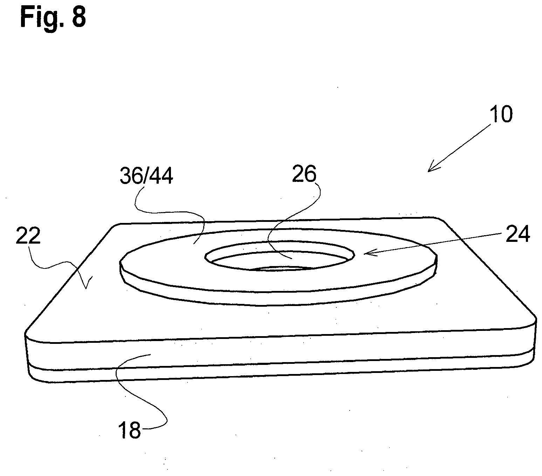

Fig. 8 zeigt eine weitere Ausführungsform einer erfindungsgemäßen Bedienungshilfe 10, bei der die aus der benutzerseitigen Oberfläche 22 heraus ragende Betätigungskontur 36 durch einen ringförmigen Kragen 44 gebildet ist, der beispielsweise am Rand der Materialausnehmung 26 an der Trägerschicht 18 angeklebt ist.

Die Funktionsweise der Bedienungshilfe 10 entspricht dabei der Ausführungsform gemäß Fig. 4a. Durch den zusätzlich angebrachten Kragen 44 wird dabei lediglich erreicht, dass die Druckbetätigungszone 30 des Aktivierungsbereichs 24 leichter ertastet werden kann. Zudem kann durch den Kragen 44 der Abstand zwischen der Druckbetätigungszone 30 und der Signalzone 28 nahezu beliebig eingestellt werden.

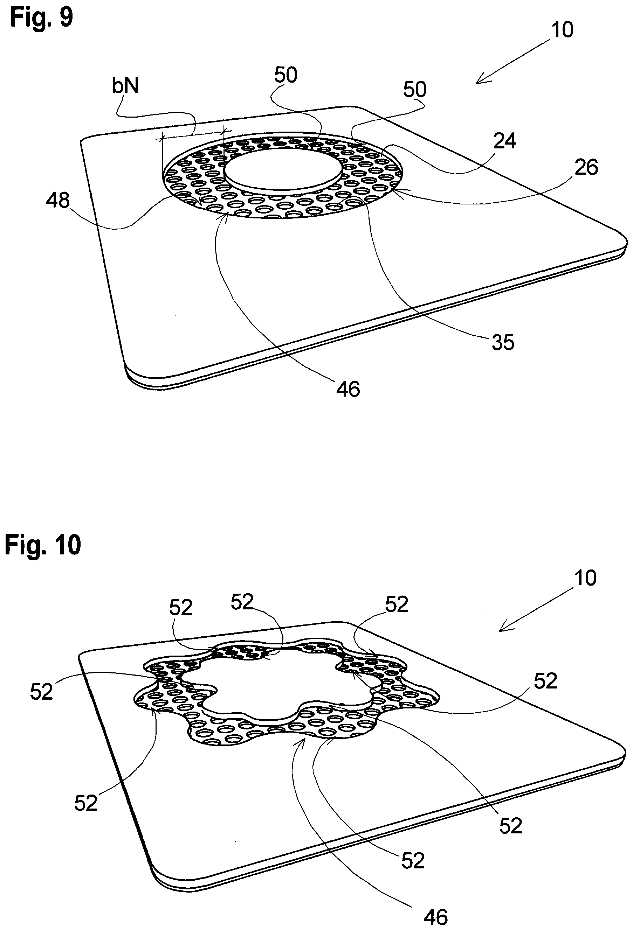

Figur 9 zeigt eine Ausführungsform der Bedienungshilfe 10, bei der die Materialausnehmung 26 des Aktivierungsbereichs 24 durch eine erste umlaufende Nut 46 gebildet ist, wodurch ein flächiger, kontinuierlicher Aktivierungsbereich 24 erzeugt werden kann. Der Druckpunkt kann dabei beispielsweise durch einen die Signalzone 28 überragenden, weichen Nutenboden 48 erzeugt werden, der entweder glatt ist oder, wie beispielhaft dargestellt eine Vielzahl von Einstellungsausnehmungen 35 zur Einstellung der zur Signalerzeugung benötigten Druckkraft aufweist.

Alternativ oder zusätzlich hierzu kann der Druckpunkt auch durch die Nutenränder 50 erzeugt werden. Hierfür kann die Nut eine relativ geringe Nutbreite bN aufweisen, wie beispielsweise zwischen 2mm bis 10mm, wodurch ein Anlegen des Fingers auf den Nutenboden 48 nur bei Druckausübung auf die Nutenränder 50 möglich ist.

In der Ausführungsform nach Fig. 10 weist die Nut 46 darüber hinaus mehrere Einbuchtungen 52 auf, die beispielsweise in wenigstens vier oder acht Himmelsrichtungen gerichtet sind, wodurch ein taktiles Erkennen dieser Positionen erleichtert wird. Das taktile Erkennen der Einbuchtungen 52 während der Druckausübung kann zudem durch durchgehende Ausnehmungen im Nutenboden zusätzlich verstärkt werden (nicht dargestellt).

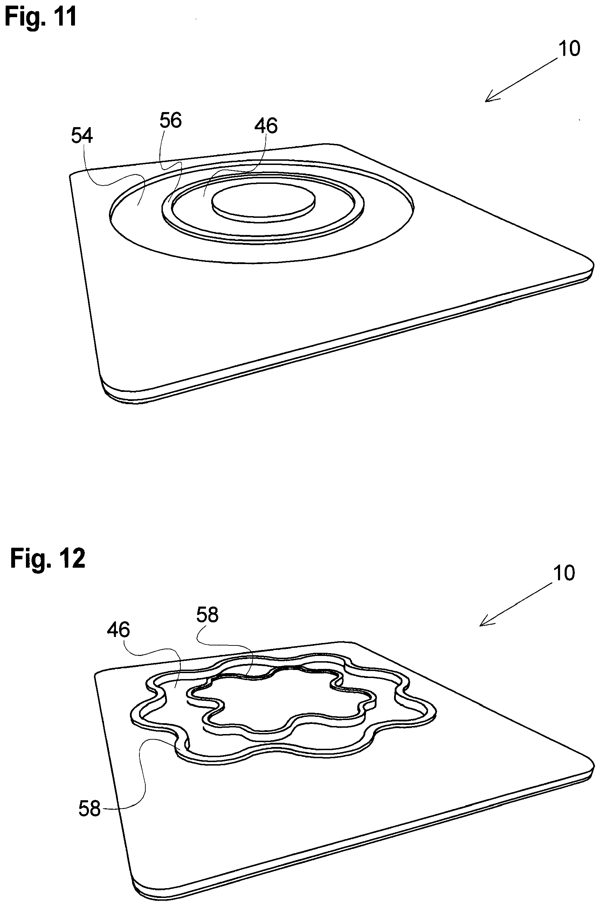

In einer weiteren vorteilhaften Ausführungsform ist neben der ersten umlaufenden Nut 46, gemäß Fig. 11 wenigstens eine weitere umlaufende Nut 54 vorgesehen, die zur ersten Nut 46 konzentrisch angeordnet ist. Beide Nuten 46, 54 sind dabei durch ein taktil erfassbares Trennelement 56 voneinander abgegrenzt. Das Trennelement 56 verhindert dabei den ungewollten Übergang von einer Nut 46, 54 zur jeweils anderen Nut 54, 46. In manchen Spieleanwendungen kann so die Geschwindigkeit von Spielfiguren besser gesteuert werden, wenn beispielsweise über die innere Nut 46 eine langsamere Bewegung generiert wird als über die äußere Nut 54.

Die Bedienungshilfen 10 gemäß der Figuren 9 bis 11 sind dabei besonders vorteilhaft für das Steuern von Spielfiguren im virtuellen Raum. Durch die jeweilige umlaufende Nut 46, 54 ist z.B. ein leichter, flüssiger Übergang des Fingers von einer Himmelsrichtung in eine andere Himmelsrichtung möglich, was auch eine flüssigere Bewegung der Spielfigur zur Folge hat. Insbesondere ist dabei beim Wechseln der Himmelsrichtung eine stoppfreie Steuerungsbewegung möglich.

Figur 12 zeigt eine weitere Ausführungsform der Bedienungshilfe 10 mit einer Nut 46, die an ihren Rändern jeweils eine umlaufende erhöhte Kontur 58 aufweist, die beispielsweise aus hartem oder aus weichem Material gebildet sein kann und für eine verbesserte Führung entlang der Nut 46 sorgt. Eine derartige erhöhte Kontur 58 kann dabei natürlich auch an mehreren Nuten 46, 54 oder einer sonstigen Materialausnehmung 26 ausgebildet sein (nicht dargestellt).

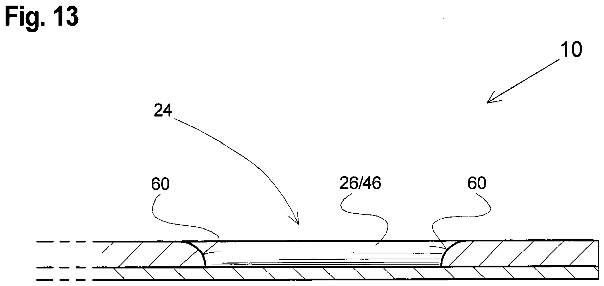

Figur 13 zeigt eine vorteilhafte Ausführungsform einer Materialausnehmung 26 eines Aktivierungsbereiches 24, die beispielhaft als Nut 46 dargestellt ist. Diese weist einen abgerundeten Ausnehmungsrand 60 auf. Die Abrundung ermöglicht dabei eine leichtere Entfernung einer Fingerspitze aus dem betreffenden Aktivierungsbereich 24 auch unter Druckausübung. Der abgerundete Ausnehmungsrand 60 bildet dabei eine Art Rampe, die weniger Widerstand erzeugt als eine gerade Kante. Ein solcher abgerundeter Ausnehmungsrand 60 ist dabei auch an jeder anderen Materialausnehmung 26 oder an der erhöhten Kontur 58 ausführbar. Insbesondere bei den Nuten 46, 54 ermöglicht der abgerundete Ausnehmungsrand 60 dabei ein komfortableres Folgen, Verlassen oder Beaufschlagen der Nuten 46, 54 oder sonstigen Materialausnehmungen auch unter Druckausübung.

## Patentansprüche

1. Berührungsempfindliches Display (4) mit einer Bedienungshilfe (10)
die ein Grundelement (12) aufweist, das eine an einer displayseitigen Oberfläche (14) vorgesehene Haftschicht (16) für die lösbare Festlegung am Display (4) aufweist und
an dem wenigstens ein Aktivierungsbereich (24) vorgesehen ist, der an einer von der displayseitigen Oberfläche (14) abgewandten benutzerseitigen Außenseite (20) taktil detektierbar ist und über den eine an der displayseitigen Oberfläche (14) positionierbare Signalzone (28) beaufschlagbar ist, um ein am Display (4) detektierbares Steuerungssignal zu generieren,
wobei an dem Aktivierungsbereich (24) eine ertastbare Druckbetätigungszone (30) vorgesehen ist, die durch einen Rand einer Materialausnehmung (26) gebildet ist und die in eine Passivstellung verbringbar ist, in der kein Steuerungssignal an der Signalzone generierbar ist,
**dadurch gekennzeichnet, dass** die Signalzone (28) durch ein vom Display (4) als kapazitives Display erzeugbares elektrisches Feld gebildet ist, das sich von der displayseitigen Oberfläche (14) in die Bedienungshilfe hinein erstreckt, und
der Aktivierungsbereich (24) an der Druckbetätigungszone (30) zwischen der displayseitigen Oberfläche (14) und der benutzerseitigen Außenseite (20) einen elastischen Materialaufbau (32) aufweist, der wenigstens durch die Haftschicht (16) in Form einer elastischen und rückstandsfrei wieder lösbaren Polymerschicht und einer aus einem Kunststoff gebildeten elastischen Trägerschicht (18) des Grundelementes (12) gebildet ist und der in einer Passivstellung eine die Signalzone (28) übersteigende erste Materialdicke (M1) von wenigstens 0,8 mm aufweist
und die Druckbetätigungszone (30) durch Druckbeaufschlagung eines anliegenden Fingers von der Passivstellung, in der sie gegenüber der Signalzone (28) beabstandet angeordnet ist, in eine Aktivstellung verlagerbar ist, in der der Aktivierungsbereich (24) eine geringere zweite Materialdicke (M2) aufweist, die vollständig innerhalb einer vertikalen Erstreckung der Signalzone (28) liegt, und so der an der Druckbetätigungszone (30) anliegende Finger zumindest teilweise innerhalb der Signalzone (28) angeordnet ist, so dass das Steuerungssignal erzeugt wird.

2. Berührungsempfindliches Display mit einer Bedienungshilfe nach Anspruch 1, wobei in der Aktivstellung die Druckbetätigungszone (30) wenigstens teilweise innerhalb der Signalzone (28) angeordnet ist.

3. Berührungsempfindliches Display mit einer Bedienungshilfe nach einem der Ansprüche 1 bis 2, wobei die Polymerschicht an der displayseitigen Oberfläche (14) eine Vielzahl von offenen Poren aufweist, mittels denen jeweils ein Unterdruck an der Displayoberfläche erzeugbar ist.

4. Berührungsempfindliches Display mit einer Bedienungshilfe nach einem der Ansprüche 1 bis 3, wobei in den elastischen Materialaufbau (32) mehrere Einstellausnehmungen (35) zur Einstellung einer für die Signalerzeugung benötigten Druckkraft eingelassen sind.

5. Berührungsempfindliches Display mit einer Bedienungshilfe nach einem der Ansprüche 1 bis 4, wobei die Materialausnehmung (26) als durchgehende Ausnehmung des Grundelementes (12) ausgebildet ist.

6. Berührungsempfindliches Display mit einer Bedienungshilfe nach einem der Ansprüche 1 bis 4, wobei die Materialausnehmung (26) muldenförmig ausgebildet ist und die displayseitige Oberfläche (14) eine geschlossene Fläche bildet.

7. Berührungsempfindliches Display mit einer Bedienungshilfe nach Anspruch 5 oder 6, wobei die Materialausnehmung (26) eine maximale Erstreckung Em von 3 bis 10 mm aufweist.

8. Berührungsempfindliches Display mit einer Bedienungshilfe nach einem der Ansprüche 5 bis 7, wobei die Materialausnehmung (26) eine erste umlaufende Nut (46) bildet.

9. Berührungsempfindliches Display mit einer Bedienungshilfe nach einem der Ansprüche 1 bis 7, wobei der Aktivierungsbereich (24) eine über eine benutzerseitige Oberfläche (22) des Grundelementes (12) hinausragende durch einen ringförmigen Kragen (44) gebildete Betätigungskontur (36) aufweist.

## Claims

1. Touch-sensitive display (4) with an operating aid (10),
comprising a base element (12) which has an adhesive layer (16) provided on a display-side surface (14) for removably attaching to the display (4), and
on which at least one activation region (24) is provided, which can be detected in a tactile manner on a user-side outer face (20) facing away from the display-side surface (14), and by means of which action can be carried out on a signal zone (28) which can be positioned on the display-side surface (14), in order to generate a control signal that can be detected on the display (4),
wherein a detectable pressure actuation zone (30) is provided on the activation region (24), which is formed by an edge of a material cut-out opening (26), and which can be brought into a passive position, in which no control signals can be generated at the signal zone,
**characterised in that** the signal zone (28) is formed by an electric field which can be generated by the display (4) as a capacitative display, which extends from the display-side surface (14) into the operating aid, and
the activation region (24) exhibits at the pressure actuation zone (30) between the display-side surface (14) and the user-side outer face (20) an elastic material structure (32), which is formed at least by the adhesive layer (16) in the form of an elastic and residue-free detachable polymer layer and an elastic carrier layer (18), formed from a plastic, of the base element (12) and in a passive position exhibits a first material thickness (M1) of at least 0.8 mm, which exceeds the signal zone (28), and the pressure actuation zone (30) can be moved by pressure imposition of a finger from the passive position, in which it is arranged at a distance from the signal zone (28), into an active position in which the activation region (24) exhibits a lesser second material thickness (M2), which lies completely inside a vertical extension of the signal zone (28), and in this way the finger in contact at the pressure actuation zone (30) is therefore at least partially arranged inside the signal zone (28), such that the control signal is generated.

2. Touch-sensitive display with an operating aid according to claim 1, wherein, in the active position, the pressure actuation zone (30) is arranged at least in part inside the signal zone (28).

3. Touch-sensitive display with an operating aid according to any one of claims 1 to 2, wherein the polymer layer at the display-side surface (14) comprises a plurality of open pores, by means of which in each case an underpressure can be produced at the display surface.

4. Touch-sensitive display with an operating aid according to any one of claims 1 to 3, wherein several adjustment cut-out openings (35) are let into the elastic material structure (32) to allow for the adjustment of the pressure force necessary for the signal generation.

5. Touch-sensitive display with an operating aid according to any one of claims 1 to 4, wherein the material cut-out opening (26) is formed as a through bore-opening of the base element (12).

6. Touch-sensitive display with an operating aid according to any one of claims 1 to 4, wherein the material cut-out opening (26) is configured in the form of a trough, and the display-side surface (14) forms a closed surface.

7. Touch-sensitive display with an operating aid according to any one of claims 5 or 6, wherein the material cut-out opening (26) exhibits a maximum extension Em of 3 to 10 mm.

8. Touch-sensitive display with an operating aid according to any one of claims 5 to 7, wherein the material cut-out opening (26) forms a first circumferential slot (46) or groove.

9. Touch-sensitive display with an operating aid according to any one of claims 1 to 7, wherein the activation region (24) comprises an actuation contour (36) which projects over a user-side surface (22) of the base element (12), formed by a ringshaped collar (44).

## Revendications

1. Dispositif d'affichage tactile (4) comprenant une aide à la commande (10) qui comporte un élément de base (12), qui comporte, pour la fixation détachable sur le dispositif d'affichage (4), une couche adhésive (16) prévue sur une surface (14) côté dispositif d'affichage, et
sur laquelle est prévue au moins un secteur d'activation (24), qui peut être détecté de manière tactile sur une face extérieure (20) côté utilisateur et à l'opposé de la surface (14) côté dispositif d'affichage et sur lequel peut être appliquée une zone de signaux (28) pouvant être positionnée sur la surface (14) côté dispositif d'affichage, afin de générer un signal de commande détectable sur le dispositif d'affichage (4),
dans lequel, sur le secteur d'activation (24), il est prévu une zone d'actionnement par pression (30) palpable, qui est formée par un bord d'un évidement de matière (26), et qui peut être mise dans un état passif, dans lequel aucun signal de commande ne peut être généré sur la zone de signaux,
**caractérisé en ce que** la zone de signaux (28) est formée par un champ électrique pouvant être généré par le dispositif d'affichage (4) en tant que dispositif d'affichage capacitif, champ qui s'étend dans l'aide à la commande depuis la surface (14) côté dispositif d'affichage, et
le secteur d'activation (24) comporte sur la zone d'actionnement par pression (30), entre la surface (14) côté dispositif d'affichage et la face extérieure (20) côté utilisateur, une structure de matière élastique (32), qui est formée par la couche adhésive (16) en forme d'une couche de polymère détachable sans laisser de résidus et élastique et d'une couche porteuse (18) de l'élément de base (12) élastique formée à partir de plastique et qui comporte, dans un état passif, une première épaisseur de matière (M1) d'au moins 0,8 mm dépassant la zone de signaux (28) et la zone d'actionnement par pression (30) est déplaçable dans un état actif par l'application de pression d'un doigt appliqué depuis l'état passif, dans lequel elle est agencée de manière espacée par rapport à la zone de signaux (28), état actif dans lequel le secteur d'activation (24) comporte une seconde épaisseur de matière (M2) qui est moindre, qui se situe entièrement à l'intérieur d'une extension verticale de la zone de signaux (28), et ainsi le doigt appliqué sur la zone d'actionnement par pression (30) est agencée au moins partiellement à l'intérieur de la zone de signaux (28), de sorte que le signal de commande soit généré.

2. Dispositif d'affichage tactile comprenant une aide à la commande selon la revendication 1, dans lequel à l'état actif la zone d'actionnement par pression (30) est agencée au moins partiellement à l'intérieur de la zone de signaux (28).

3. Dispositif d'affichage tactile comprenant une aide à la commande selon l'une des revendications 1 à 2, dans lequel la couche de polymère comporte une pluralité de pores ouverts sur la surface (14) côté dispositif d'affichage, au moyen desquels une dépression peut être générée sur la surface d'affichage.

4. Dispositif d'affichage tactile comprenant une aide à la commande selon l'une des revendications 1 à 3, dans lequel plusieurs évidements d'ajustage (35) sont encastrés dans une structure de matière élastique (32), pour l'ajustement d'une force de pression nécessaire pour générer des signaux.

5. Dispositif d'affichage tactile comprenant une aide à la commande selon l'une des revendications 1 à 4, dans lequel l'évidement de matière (26) est réalisé comme un évidement traversant de l'élément de base (12).

6. Dispositif d'affichage tactile comprenant une aide à la commande selon l'une des revendications 1 à 4, dans lequel l'évidement de matière (26) est réalisé en forme d'auge et la surface (14) côté dispositif d'affichage forme une surface fermée.

7. Dispositif d'affichage tactile comprenant une aide à la commande selon la revendication 5 ou 6, dans lequel l'évidement de matière (26) comporte une extension maximale Em allant de 3 à 10 mm.

8. Dispositif d'affichage tactile comprenant une aide à la commande selon l'une des revendications 5 à 7, dans lequel l'évidement de matière (26) forme une première rainure circonférentielle (46).

9. Dispositif d'affichage tactile comprenant une aide à la commande selon l'une des revendications 1 à 7, dans lequel le secteur d'activation (24) comporte un contour d'actionnement (36) formé par une collerette en forme d'anneau (44) qui dépasse d'une surface coté utilisateur (22) de l'élément de base (12).
